# FASCICULE DE BREVET EUROPEEN

(11) **EP 1 141 902 B1**
(45) Date de publication et mention de la délivrance du brevet: **18.02.2009**
(21) Numéro de dépôt: 00974647.0
(22) Date de dépôt: 03.11.2000
(51) Int. Cl.: G07D 7/16, G07D 7/00, G06K 19/10, G07F 7/08

(54) **PROCEDE DE MARQUAGE ET D'AUTHENTIFICATION D'UN OBJET**
VERFAHREN ZUR MARKIERUNG UND ZUR AUTHENTIFIZIERUNG EINES GEGENSTANDES
METHOD FOR MARKING AND AUTHENTICATING AN OBJECT

(30) Priorité: 05.11.1999 FR 9913936
(43) Date de publication de la demande: 10.10.2001
(73) Titulaire: BANQUE DE FRANCE, 75001 Paris (FR)
(72) Inventeur: PERRON, Maurice, F-78220 Viroflay (FR); CHARLES, Jean-Louis, F-63830 Durtol (FR); TRAPLETTI, Claude, 22950 Tregueux (FR)
(74) Mandataire: Le Forestier, Eric
(86) Numéro de dépôt international: PCT/FR2000/003068
(87) Numéro de publication internationale: WO 2001/033514

(56) Documents cités:
- FR-A- 2 765 014
- US-A- 4 290 630
- US-A- 5 639 126
- US-A- 5 818 019

## Description

La présente invention concerne un procédé de marquage et d'authentification d'objets.

L'invention concerne de manière générale les objets susceptibles d'être contrefaits. A ce titre, elle s'applique de manière particulièrement pertinente, mais non limitative, aux documents fiduciaires (c'est à dire les documents auxquels une valeur est intrinsèquement associée - billets de banque, chèques, timbres, ...), les documents de sécurité (passeports...) ou dont il est important d'établir l'authenticité (cartes bancaires, actes juridiques, tickets de loterie ,...), etc....

On connaît déjà de nombreux types de moyens pour appliquer à un objet de valeur un marquage, de préférence non discernable à l'oeil nu, permettant un contrôle de l'authenticité de l'objet avec des moyens appropriés (codage de caractères chiffrés, dépôt de marquage luminescent,...).

Pour diminuer encore le risque de contrefaçon, on connaît également des objets portant deux informations liées, une des informations étant invisible à l'oeil nu.

EP A 609 937 enseigne ainsi un chèque comportant une zone de marquage qui reproduit de manière invisible à l'oeil nu une information visible du chèque (numéro de série ou autre). Une lecture par machine permet de s'assurer que la zone de marquage contient la reproduction de l'information visible.

Cette disposition est intéressante. Toutefois, la diffusion rapide des perfectionnements dans les domaines des logiciels d'analyse d'image et du décryptage la rend relativement fragile vis-à-vis de contrefacteurs qui seront à même de la reproduire dès qu'ils auront percé le code permettant de lire l'information de la zone de marquage. Une telle reproduction sera également favorisée par le fait que la technique d'impression du marquage invisible est facilement accessible au contrefacteur une fois le code décrypté.

GB A 2 252 270 enseigne quant à lui une carte de crédit ou téléphonique comprenant une information visible dans une première zone, et une information cachée (par exemple sous une pellicule plastique opaque) dans une seconde zone. Une telle carte peut être authentifiée en découvrant de manière irréversible l'information cachée. Mais cette disposition ne permet de procéder à l'authentification de l'objet qu'une seule fois, ce qui ne constitue pas une solution adaptée dans de nombreux cas où on doit pouvoir vérifier l'authenticité de l'objet de manière répétée (cas des billets de banque par exemple).

On connaît par ailleurs par le document FR 2 765 014 un document sécurisé par l'impression d'un numéro inscrit en clair, et associé dans une mémoire de masse à une information de répartition de fibres magnétiques dans le document.

Cette disposition est également intéressante. Toutefois, la répartition des fibres magnétiques dans le billet étant aléatoire, il n'est pas possible de procéder à des codages selon des séquences désirées.

On connaît également d'autres moyens de sécurisation pouvant éventuellement être appliqués à des documents. On citera à cet égard le document US 5 818 019 qui divulgue des moyens pour sécuriser un document tel qu'un billet de loterie, à l'aide de moyens tels qu'une impression sélective d'une encre conductrice qui constituent un circuit électrique.

Un inconvénient d'une telle disposition est qu'elle est relativement complexe à mettre en oeuvre. Et en outre, l'encre conductrice étant simplement imprimée à la surface du papier, il est nécessaire de prévoir des moyens de protection qui augmentent le coût de revient de la sécurisation du document. Enfin, il est difficilement envisageable d'appliquer les enseignements de ce document à la sécurisation de documents tels que des billets de banque, du fait de la complexité et du coût qui leur sont associés.

Un but de l'invention est de permettre de réaliser des objets comportant des moyens d'authentification de haute sécurité.

Un autre but de l'invention est de permettre en outre de réaliser des séquences de marquage désirées sur des lots d'objet que l'on souhaite sécuriser.

Un autre but encore de l'invention est de permettre en outre de réaliser un tel marquage de manière simple et économique.

Afin d'atteindre ces buts, l'invention propose un procédé de marquage et d'authentification d'un objet comportant l'association à l'objet de deux informations différentes liées entre elles par une correspondance arbitraire donnée et utilisées pour l'authentification de l'objet, au moins une des deux informations étant intrinsèquement imperceptible par un observateur, la lecture des deux informations et la vérification de leur correspondance entre elles étant réalisées lors de l'authentification de l'objet, procédé caractérisé en ce que les deux informations sont non aléatoires et ladite information imperceptible est matérialisée par des moyens interagissant avec la structure de l'objet.

Le procédé selon l'invention est exposé dans les revendications 1 - 25.

D'autres aspects, buts et avantages de l'invention apparaîtront mieux à la lecture de la description suivante de formes préférées de réalisation de l'invention, faite à titre d'exemple et en référence aux dessins annexés, sur lesquels :
- La figure 1 est une représentation schématique d'un billet de banque réalisé selon l'invention,
- La figure 2 montre les principales étapes d'un procédé, également selon l'invention, permettant de réaliser le billet de la figure 1 et de l'authentifier,
- La figure 3 montre les principales étapes d'une variante de procédé selon l'invention, pour fabriquer un billet de banque et l'authentifier.

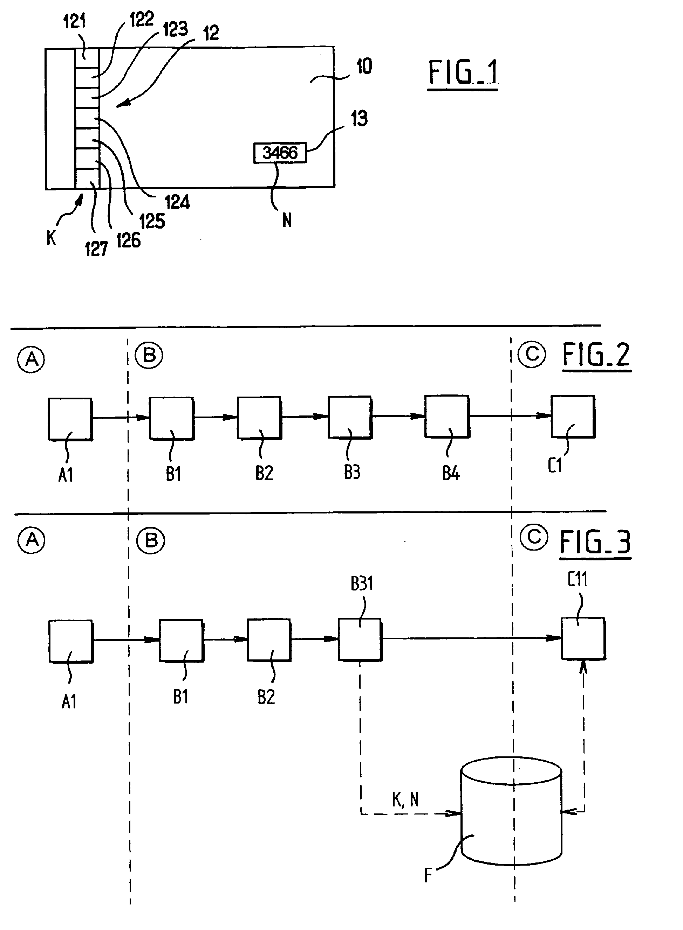

La figure 1 montre un billet de banque 10, comprenant dans sa partie gauche un domaine 12.

Dans le mode de réalisation représenté sur la figure 1, le domaine 12 a la forme d'une bande qui couvre toute la largeur du billet.

Le domaine 12 est divisé en sept zones 121 à 127 adjacentes deux à deux, disposées en série et de surface équivalente.

Chaque zone 121 à 127 peut être imprimée ou non, de sorte que le domaine 12 forme un motif visible de zones non imprimées et de zones imprimées.

On va maintenant décrire la manière particulière dont, selon l'invention le motif formé par les zones du domaine 12 est imprimé.

Certaines zones sont comme on l'a dit imprimées et d'autres peuvent ne pas l'être ; plus précisément, on choisit les zones à imprimer de manière à réaliser un codage bidimensionnel sur le domaine 12.

Plus précisément encore, selon l'invention, l'impression des zones choisies du domaine 12 est réalisée selon la technique spécifique de la taille douce, qui permet de contrôler l'épaisseur d'encre déposée sur le billet.

On pourra par exemple déposer sur les zones choisies du domaine 12 une épaisseur d'encre qui peut avoir soit une première épaisseur E1 comprise par exemple entre 10 et 25 microns, soit une épaisseur E2 comprise par exemple entre 30 et 60 microns, en assurant que les valeurs nominales soient assez espacées les unes des autres pour que les phénomènes d'usure de l'impression taille douce ne viennent pas perturber les mesures.

Ainsi, pour une pose de taille douce sur le domaine 12, on applique sur le domaine 12 une plaque dont la surface porte en certains endroits, situés en regard des zones choisies à imprimer, des gravures en creux d'une profondeur E1 ou E2 remplies d'encre pour déposer cette épaisseur d'encre sur la zone choisie du billet.

De la sorte, le motif bidimensionnel créé est déjà un codage en soi, qui peut être visible à un observateur, ou non dans le cas de zones de très petite taille (le nombre des zones de chaque domaine pouvant être quelconque).

En outre, on créé également un codage tridimensionnel équivalent à une information K qui, intrinsèquement, est physiquement imperceptible à un observateur, car la différence d'épaisseur d'encre déposée entre les zones choisies du domaine 12 (E1 ou E2, toutes deux inférieures à 60 microns) n'est perceptible qu'avec des moyens de mesure sophistiqués.

Et le fait que l'information K soit imperceptible à un observateur est ici intrinsèquement lié à la manière spécifique dont cette information est codée sur le billet, qui rend impossible toute lecture sans machine. En ceci le codage réalisé par l'impression taille douce est plus efficace qu'un simple codage intrinsèquement perceptible par un observateur qui serait simplement rendu invisible, par exemple une information imprimée recouverte par une bande qui peut être arrachée ou grattée par un observateur pour que celui-ci accède à l'information.

En outre, on ne se contente pas ici d'apposer un marquage au billet, l'impression taille douce impliquant une interaction avec la structure du billet : en effet, dans cette technique d'impression, une forme d'impression comprenant des cavités remplies d'encre et de profondeurs pouvant être différentes et pressée contre le billet. Les parties du billet se trouvant en regard des cavités sont alors déformées par suite de leur engagement dans les cavités. Une impression taille douce réalise ainsi à la fois une altération contrôlée de la surface du billet et un dépôt d'encre, dont l'épaisseur est également contrôlée..

On réalise donc, dans l'exemple particulier décrit en référence à la figure 1, un codage tridimensionnel invisible, dissimulé dans un motif bidimentionnel qui peut être visible.

Les zones choisies du domaine 12 doivent être assez larges pour tenir compte de l'usure du dépôt d'encre taille douce, et assurer que malgré les manipulations que le billet subit, une surface significative de ces zones demeure recouverte de l'épaisseur d'encre désirée. On pourra également revêtir le dépôt d'encre d'une pellicule de protection qui peut être translucide.

Comme on l'a dit, les dépôts d'encre sur le domaine 12 forment un code tridimensionnel K imperceptible à un observateur. Dans l'exemple particulier de la figure 1, il est ainsi possible d'imprimer par jet d'encre une combinaison quelconque des sept zones 121 à 127 du domaine 12, le nombre de combinaisons étant alors égal à 5040. Toutes les zones du domaine 12 peuvent par ailleurs être imprimées.

Bien entendu, la forme du motif bidimensionnel formé par les zones imprimées et non imprimées du domaine 12 n'est pas réduite à l'exemple très simplifié de la figure 1 ; ces zones peuvent être définies de manière à ce que le motif soit quelconque, le domaine 12 n'étant pas nécessairement une aire telle qu'un rectangle mais pouvant être remplacé par une distribution quelconque des zones susceptibles de recevoir une impression taille douce, lesdites zones ne constituant pas nécessairement des domaines topologiquement continus. Il est ainsi possible de réaliser de très nombreuses combinaisons tridimensionnelles pour coder les zones du domaine 12.

On remarquera que la réalisation d'un tel codage par un contrefacteur est déjà en elle-même extrêmement improbable, car elle impliquerait de disposer du matériel et des compétences nécessaires à l'impression en taille douce.

Le billet 10 comporte également une zone 13 dans laquelle est imprimé en caractères visibles une deuxième information N qui est dans cet exemple le numéro de série du billet (3466 dont l'exemple décrit ici). On va maintenant voir en référence aux figures 2 et 3 comment on utilise selon l'invention les deux informations K et N liées au billet pour sécuriser encore l'authentification du billet.

Le procédé représenté sur la figure 2 comprend trois étapes principales :
- l'étape A, qui correspond à la création du code tridimensionnel et à son impression sur le billet,
- l'étape B, lors de laquelle on associe par une relation arbitraire donnée le code tridimensionnel au numéro de série du billet, qui est imprimé dans le domaine 13; les étapes A et B correspondent ainsi à la fabrication du billet,
- l'étape C qui correspond à l'authentification du billet une fois que celui-ci est mis en circulation.

Plus précisément, lors de l'étape A, on procède à l'étape A1 qui consiste à imprimer sur le billet le codage tridimensionnel décrit en référence à la figure 1. Le codage est réalisé selon un mode programmé (codage prédéterminé).

Plus précisément, il est possible de marquer chaque billet d'un lot spécifique par un code appartenant à une séquence désirée en ce qui concerne l'information K. Ceci permet de constituer des lots de billets à l'intérieur desquels les informations K, d'une part et N d'autre part, suivent toute loi désirée.

Il est également possible de mettre en oeuvre la technique taille douce sans encre, le relief du billet étant alors déformé par l'application de la forme sur sa surface ; dans ce cas, sous l'effet de la pression de la forme, le papier se loge au fond des cavités de la forme et subit une déformation contrôlée sans recevoir d'encre. Un codage tridimensionnel K est réalisé par la répartition contrôlée des reliefs du billet.

L'étape B comporte principalement quatre sous-étapes :
- en B1, une machine lit le code tridimensionnel (qu'il ait été réalisé de manière programmée ou aléatoire) et le transmet à une unité centrale de mémorisation de l'appareil de production des billets,
- en B2, on procède à l'impression du numéro de série du billet et simultanément à sa mémorisation dans l'unité centrale de mémorisation,
- en B3, les informations K et N sont traitées par un algorithme déterminé dont le résultat (que l'on appellera une fonction de bijection de K et N et que l'on notera M) est imprimé sous forme chiffrée sur le billet en B4. L'impression de la fonction de bijection peut être réalisée dans une zone dédiée, ou peut être camouflée à l'intérieur de l'impression du numéro de série en utilisant des très petits caractères pour la fonction de bijection.

La fonction de bijection peut par exemple être chiffrée sous la forme de trois pictogrammes, par exemple des caractères alphanumériques pouvant chacun être une lettre majuscule, une lettre minuscule ou un chiffre (soit 26+26+10=62 possibilités par caractère), les trois caractères étant différents. Dans ce cas, il existe 226920 combinaisons possibles pour la fonction de bijection.

Lors de l'étape C, on procède à l'authentification du billet en C1 par lecture en machine du code K, du numéro N et de la fonction de bijection M. La machine d'authentification, qui comprend l'algorithme ayant servi à l'élaboration de la fonction de bijection, vérifie alors la correspondance entre les informations K, N et M, cet algorithme n'étant pas accessible de l'extérieur de la machine, même à un contrefacteur qui se serait emparé de la machine. Cette machine peut être autonome, c'est à dire qu'elle n'est pas reliée à un site central comprenant les informations K et N associées à chaque billet.

Dans tous les cas de figure, qu'on calcule une fonction de bijection ou non, les moyens de vérification de l'authenticité du billet ne renvoient qu'un signal dichotomique pouvant prendre seulement deux valeurs, correspondant respectivement à un billet authentique et à un billet non authentique.

Il apparaît ainsi que le procédé décrit permet un marquage dont le niveau de sécurité est extrêmement haut. En effet, ce procédé combine plusieurs éléments de sécurité forts :
- une technique de marquage très peu accessible aux faussaires et permettant de réaliser un codage totalement imperceptible à un observateur. En effet, la taille douce qui a servi à illustrer l'exemple du billet de la figure 1 et qui constitue une technique préférée (mais non exclusive) de mise en oeuvre de l'invention, constitue en soi un obstacle à la contrefaçon du fait des compétences et des moyens très spécifiques à mettre en oeuvre, et les motifs tridimensionnels qu'elle permet de réaliser ne peuvent être lus que par des machines,
- du fait des très nombreuses combinaisons possibles pour le code K et pour la fonction de bijection M, il est virtuellement impossible à un contrefacteur de déterminer l'algorithme de calcul,
- de plus :
   ➢ dans le cas où un algorithme élabore une fonction de bijection M, cet algorithme est sécurisé dans la machine qui procède à la vérification de l'authenticité du billet (ou comme on le verra dans un autre site sécurisé) ; l'algorithme qui est une clé de calcul est donc inaccessible,
   ➢ et dans tous les cas le caractère dichotomique de la réponse des moyens de contrôle ne fournit aucun élément permettant de déterminer la corrélation entre les informations contenues dans le billet.

Les étapes du procédé ci-dessus peuvent se dérouler dans un ordre différent. En particulier, il est possible d'imprimer le numéro N et de le mémoriser avant d'imprimer le code K. Il est également possible d'imprimer les deux informations en deux lieux différents, ce qui permet d'augmenter encore le niveau de sécurité du procédé.

Il est également possible d'associer au billet un codage intrinsèquement imperceptible à un observateur par d'autres procédés qui impliquent une interaction avec la structure même du billet (ou, de manière plus générale, de l'objet à marquer). En particulier, on pourra intégrer dans le papier du billet des micro-capsules contenant un liquide qui permet d'effectuer un codage.

Dans un mode de réalisation préféré, ces micro-capsules sont constituées d'un vernis liquide et qui renferme des dipôles magnétiques. Après intégration du vernis au papier (lors de la fabrication du papier ou par application ultérieure), on soumet le papier à un champ électromagnétique non uniforme dans au moins une direction parallèle au plan du billet (la répartition des valeurs du champ étant contrôlée ou non), ce qui a pour effet d'orienter les dipôles contenus dans le vernis liquide. On expose ensuite le billet à un rayonnement permettant de sécher le vernis (par exemple un rayonnement ultraviolet qui provoque la polymérisation du vernis), de manière à figer l'orientation des dipôles. Il sera ensuite possible de « lire » par machine le champ bidimensionnel induit par la répartition des dipôles ; c'est la répartition bidimensionnelle de ce champ qui constitue alors l'information codée K.

Les micro-capsules peuvent également renfermer tout produit dont une propriété spécifique peut être détectée, ladite propriété pouvant être activable comme dans le cas des dipôles que l'on expose à un champ électromagnétique, ou non (exemple de micro-capsules renfermant un ou plusieurs colorants). Il est dans tous les cas important que les variations de cette propriété lorsque l'on décrit la surface du billet soient mesurables de manière à pouvoir caractériser le code K.

La figure 3 représente une variante de procédé selon l'invention, dans laquelle on ne calcule pas de fonction de bijection. Dans ce cas, les étapes A1, B1 et B2 sont exécutées, puis :
- en B31, l'unité centrale de mémorisation élabore un fichier F comprenant les couples (K, N) pour chaque billet fabriqué ; on crée ainsi entre les informations K et N une relation qui est arbitraire (elle ne répond pas à un déterminisme quelconque), et qui est également fixée dans la mémoire du fichier F. On remarquera que dans le cas où on élabore une fonction de bijection M, il existe également une relation arbitraire donnée entre K et N, cette relation étant « K et N sont cohérentes entre elles en tant que données d'entrée de l'algorithme permettant d'élaborer la fonction de bijection M »,
- et l'étape d'authentification C11 consiste ici à faire lire par une machine le code K et le numéro N du billet, et à interroger à distance le fichier F (par une liaison filaire - par exemple téléphonique, ou tout autre mode de transmission connu - radio ou autre), afin de vérifier la correspondance entre ces deux informations.

Bien que l'application de l'invention à la sécurisation des billets de banque soit extrêmement pertinente et que la taille douce ou l'intégration au papier de micro-capsules constituent des techniques particulièrement adaptées pour le marquage tridimensionnel d'objets et de documents de valeur réalisés selon l'invention, on ne saurait réduire l'invention aux formes particulières de réalisation décrites ci-dessus.

Il est par exemple également possible de renforcer encore la sécurité du marquage en impression taille douce, en employant pour l'impression sur l'objet à protéger une encre comportant au moins une substance dotée d'une propriété particulière qui puisse être mesurée (de manière connue en soi) par machine, la mesure de ladite propriété étant proportionnelle à l'épaisseur ou à la quantité de substance déposée sur l'objet.

Dans ce cas, la lecture du code K se fait par mesure, en chaque point du domaine imprimé, de cette propriété particulière, ladite mesure étant proportionnelle à l'épaisseur de substance présente audit point de l'objet, et donc à l'épaisseur d'encre déposée sur ce point (la concentration de la substance dans l'encre étant connue). L'ensemble des mesures aux différents points du domaine permet de reconstituer un code K équivalent à un code tridimensionnel.

Ainsi, on pourra par exemple déposer en impression taille douce une encre comportant une concentration connue d'une substance ayant une propriété qui peut être magnétique, électrique (conduction ou autre), optique (visible ou non, pouvant utiliser la luminescence de substances fluorescentes ou phosphorescentes ...), chimique, biologique. Les moyens de lecture du code K comprennent dans ce cas des moyens adaptés pour la mesure de la propriété associée à la substance (par exemple caméra pour une substance ayant une propriété optique, ou bien moyens de lecture magnétique, interféromètre, lecteur hyperfréquence ...).

Si les moyens de lecture du code K permettent une mesure sans contact de la propriété de la substance contenue dans l'encre (par exemple dans le cas de la mesure d'un champ magnétique), il est également possible de recouvrir le dépôt tridimensionnel comportant le code K avec des moyens de camouflage, dont l'application sur le document peut éventuellement provoquer un nivellement de l'épaisseur d'encre (cas du recouvrement par un hologramme appliqué par pression à chaud).

On a dit que parmi les techniques de réalisation du code K, la taille douce constitue un procédé particulièrement bien adapté ; tout autre procédé permettant d'effectuer un marquage intrinsèquement imperceptible à un observateur - en relief ou non - et interagissant avec la structure de l'objet peut cependant être mis en oeuvre selon l'invention.

Reprenant le cas du billet de banque, on peut ainsi réaliser le code K sous forme d'un code lisible seulement par machine et imperceptible à un observateur. Par exemple, ceci peut être réalisé :
- en intégrant le code K à un élément intermédiaire tel qu'un fil de sécurité, qui sera lui-même intégré au billet (par exemple lors de la fabrication du papier,
- ou encore en intégrant le code K à l'intérieur même de la structure du billet (cas d'un filigrane portant le code K).

On pourra en outre réaliser non seulement le marquage de l'information K, mais également celui de l'information N de manière à ce que ce marquage soit intrinsèquement imperceptible à un observateur, la caractéristique essentielle de l'invention étant de prévoir deux informations associées entre elles, l'une au moins des deux informations n'étant pas perceptible par un observateur.

Il est également possible de mettre en oeuvre l'invention avec tout objet de valeur susceptible d'être contrefait (disques compacts audio ou vidéo, parfums, médicaments, pièces détachées de voitures, bijoux et vêtements de marque...), et d'utiliser sur différents types de supports (métal, plastique, verre, tissu..) tout procédé permettant d'obtenir un marquage reconnaissable par machine mais imperceptible à un observateur.

Selon une forme de réalisation correspondant à l'exemple de la taille douce qui a été développé plus haut, on choisira un procédé permettant de marquer l'objet en relief de manière contrôlée.

On pourra à cet effet mettre en oeuvre tout procédé permettant de contrôler des variations de relief très fines (relief micrométrique), de manière à ce que ces variations soient lisibles par machine mais imperceptibles à un observateur: sérigraphie, héliogravure, gravure mécanique de haute précision, gravure chimique, gravure laser...)

Une partie de l'information non perceptible peut comme on l'a dit être matérialisée de manière aléatoire ; on pourra ainsi réaliser tout ou partie de cette information avec des variations de relief non contrôlées, l'information étant lue et mise en mémoire en association lors du marquage de l'objet.

On notera que l'invention permet non seulement de sécuriser un objet, mais également de suivre son cheminement (établissement d'une traçabilité) ; en effet, le nombre de vérifications de l'authenticité d'un objet est illimité et lors de chaque vérification on est certain de disposer de l'objet original (billet de banque ou autre).

Cet aspect est intéressant dans la perspective de la lutte contre la contrefaçon, dans la mesure où en effectuant des contrôles fréquents il est possible d'encadrer avec précision le lieu et le moment d'une contrefaçon. Bien évidemment, il est possible d'apposer sur les objets à protéger une étiquette munie d'un marquage selon l'invention, au lieu de marquer l'objet directement.

Selon une variante de l'invention, il est également possible de séparer physiquement les deux informations K et N : on pourra par exemple marquer des montres de valeur avec une première information K, et le certificat de garantie de la montre avec une deuxième information N, l'une au moins des deux informations étant imperceptible à un observateur. Lors de l'authentification, on procède au déchiffrage des deux informations sur la montre et sur le certificat (et au déchiffrage de la fonction de bijection si on en a prévu un). Une telle disposition accroît encore le niveau de sécurité du procédé. Par ailleurs, il est possible d'intégrer les deux informations K et N en des lieux différents, ce qui augment la souplesse de la fabrication et permet d'augmenter encore le niveau de sécurité.

Enfin, dans le cas où on élabore une fonction de bijection M en fonction des deux informations K et N, on peut comme on l'a dit prévoir une machine d'authentification autonome comportant l'algorithme de calcul de la fonction de bijection à partir de K et de N (par exemple un terminal portable comprenant dans une carte à microprocesseur l'algorithme), mais il est également possible de garder cet algorithme dans un site central sécurisé avec lequel la machine d'authentification peut dialoguer à distance (par liaison filaire ou hertzienne).

Il est également possible de prévoir une formule « mixte » dans laquelle la machine d'authentification contient une partie des données permettant de reconstituer l'algorithme de calcul, la machine devant dialoguer avec un site central selon un protocole déterminé pour obtenir des données supplémentaires permettant de reconstituer la fonction de bijection. On pourra également prévoir des algorithmes différents, en constituant ainsi des lots d'objets marqués, chaque lot étant composé des objets associés au même algorithme.

## Revendications

1. Procédé de marquage (A, B) et d'authentification (C) d'un objet (10) comportant deux informations différentes (K, N) utilisées pour l'authentification de l'objet, au moins une des deux informations (K) étant visuellement imperceptible par un observateur, la lecture des deux informations et la vérification d'une correspondance entre elles étant réalisées lors de l'authentification de l'objet, les deux informations étant non aléatoires et ladite information imperceptible est matérialisée par des moyens interagissant avec la structure de l'objet, **caractérisé en ce que** le procédé comporte également l'élaboration (B3) d'une troisième information (M) qui est codée à partir d'un algorithme déterminé dont des données d'entrée sont les deux informations (K, N) non aléatoires, et **en ce que** le procédé comporte également l'intégration à l'objet (B4) de ladite troisième information.

2. Procédé selon la revendication précédente, dans lequel l'algorithme est une fonction de bijection.

3. Procédé selon l'une des revendications précédentes, **caractérisé en ce qu'**au moins une information (K) non perceptible par un observateur est matérialisée par une déformation de relief variable de manière à former sur ou dans l'objet un code tridimensionnel imperceptible à un observateur.

4. Procédé selon l'une des revendications précédentes, **caractérisé en ce qu'**au moins une information (K) non perceptible par un observateur est matérialisée par un dépôt d'encre d'épaisseur variable de manière à former sur ou dans l'objet un code tridimensionnel imperceptible à un observateur.

5. Procédé selon la revendication précédente, **caractérisé en ce que** ladite information (K) non perceptible par un observateur comprend une combinaison d'un nombre donné de zones (211 à 217), l'épaisseur du dépôt d'encre sur chacune de ces zones étant variable.

6. Procédé selon la revendication précédente, **caractérisé en ce que** l'épaisseur du dépôt d'encre de chaque zone (211 à 217) imprimée peut être égale à une première épaisseur (E1) sensiblement comprise entre 10 et 25 microns, ou à une deuxième épaisseur (E2) sensiblement comprise entre 30 et 60 microns.

7. Procédé selon l'une des revendications 5 à 7, **caractérisé en ce qu'**au moins une information (K) non perceptible par un observateur comporte au moins une partie (211 à 217) imprimée en relief, notamment en taille douce.

8. Procédé selon l'une des revendications 5 à 8, **caractérisé en ce que** l'encre contient une substance dotée d'une propriété physique, chimique ou biologique, mesurable et proportionnelle à la quantité ou à l'épaisseur de substance intégrée sur ou dans l'objet.

9. Procédé selon la revendication précédente, **caractérisé en ce que** la propriété est mécanique, magnétique, électrique ou optique.

10. Procédé selon l'une des revendications précédentes, **caractérisé en Ce que** l'objet est un document tel qu'un billet de banque et au moins une information non perceptible par un observateur est matérialisée sur le document par intégration à un support intermédiaire qui est lui-même intégré au document.

11. Procédé selon la revendication précédente, **caractérisé en ce que** le support intermédiaire est un fil de sécurité code.

12. Procédé selon l'une des revendications précédentes, **caractérisé en ce que** l'objet est un document tel qu'un billet de banque et au moins une information non perceptible par un observateur est matérialisée sur le document par intégration dans la structure du document.

13. Procédé selon la revendication précédente, **caractérisé en ce qu'**au moins une information non perceptible par un observateur est intégrée à un filigrane.

14. Procédé selon l'une des revendications précédentes, **caractérisé en ce qu'**au moins une information non perceptible par un observateur est matérialisée par intégration à l'objet de micro-capsules de liquide contenant un produit dont une propriété est mesurable.

15. Procédé selon la revendication précédente, **caractérisé en ce que** les micro-capsules contiennent des dipôles et on soumet l'objet auquel sont intégrées les micro-capsules à un champ électromagnétique permettant d'orienter les dipôles de manière spécifique.

16. Procédé selon l'une des revendications précédentes, **caractérisé en ce qu'**une des deux informations non aléatoires est physiquement intégrée sur ou dans ledit objet, l'autre information étant liée à un support physique différent.

17. Procédé selon lune des revendications précédentes, **caractérisé en ce qu'**il comporte en association avec le marquage de chacune des deux informations (K, N) non aléatoires sur un support physique, la transmission de ces informations à une unité centrale d'authentification.

18. Procédé selon la revendication précédente, **caractérisé en ce que** l'interrogation du fichier se fait par des moyens de communication à distance.

19. Procédé selon l'une des revendications précédentes, **caractérisé en ce qu'**il comporte une étape (BI) do lecture et de transmission dune information non perceptible par un observateur (K) à une unité centrale d'authentification.

20. Procédé selon l'une des revendications précédentes prise en combinaison avec la revendication 2, **caractérisé en ce que** la troisième information (M) comprend un ensemble d'un nombre donné do pictogrammes appartenant chacun a un jeu donné de pictogrammes.

21. Procédé selon la revendication précédente, **caractérisé en ce que** la troisième information est imprimée sur l'objet et camouflée dans impression dune des informations non aléatoire (N).

22. Procédé selon l'une des revendications précédentes prise en combinaison avec la revendication 2, **caractérisé en ce que** l'authentification comprend également la lecture de la troisième information (M) et la vérification de la correspondance de cette information avec les deux informations (K, N) non aléatoires.

23. Procédé selon la revendication précédente, **caractérisé en ce que** la vérification de la correspondance de la troisième information avec les deux informations non aléatoires met en oeuvre une mémoire locale liée à une machine d'authentification et contenant l'algorithme ayant servi à élaborer la troisième information.

24. Procédé selon la revendication 23, **caractérisé en ce que** la vérification de la correspondance de la troisième information avec les deux informations non aléatoires met en oeuvre une communication à distance avec une unité centrale sécurisée pour reconstituer la troisième information en mettant en oeuvre ledit algorithme.

25. Procédé selon la revendication 1, **caractérisé en ce que** l'objet est un document fiduciaire ou de sécurité, en particulier un billet de banque ou une carte bancaire.

## Claims

1. Marking (A, B) and authentification (C) process of an object (10) comprising two different items of information (K, N) used for the authentification of the object, at least of the two items of information (K) being visually imperceptible by an observer, the reading of the two items of information and the verification of a correspondence between same being carried out during the authentification of the object, the two items of information being non-random and said imperceptible item of information is realized by means interacting with the structure of the object, **characterised in that** the process also comprises the **p**rocessing (B3) of a third item of information (M) which is encoded using a determined algorithm wherein the input data consists of the two non-random items of information (K, N), and **in that** the process also comprises the integration of said third item of information in said object (B4).

2. Process according to the above claim, wherein the algorithm is a bijective function.

3. Process according to any of the above claims, **characterised in that** at least one non-perceptible item of information (K) by an observer is realized by a variable relief deformation so as to form on or in the object an imperceptible three-dimensional code to an observer.

4. Process according to any of the above claims, **characterised in that** at least one non-perceptible item of information (K) by an observer is realized by a deposition of ink of variable thickness so as to form on or in the object an imperceptible three-dimensional code to an observer.

5. Process according to the above claim **characterised in that** said non-perceptible item of information (K) by an observer comprises a combination of a given number of zones (211 to 217), the thickness of the ink deposition on each of said zones being variable.

6. Process according to the above claim, **characterised in that** the thickness of the ink deposition of each printed zone (211 to 217) may be equal to a first thickness (E1) substantially between 10 and 25 microns, or a second thickness (E2) substantially between 30 and 60 microns.

7. Process according to any of claims 5 to 7, **characterised in that** at least one non-perceptible item of information (K) by an observer comprises at least one part (211 to 217) printed in relief, particularly in intaglio print.

8. Process according to any of claims 5 to 8, **characterised in that** the ink contains a substance provided with a physical, chemical or biological property, measurable and proportional to the quantity or thickness of substance integrated on or in the object.

9. Process according to the above claim, **characterised in that** the property is mechanical, magnetic, electrical or optical.

10. Process according to any of the above claims, **characterised in that** the object is a document such as a banknote and at least one non-perceptible item of information by an observer is represented on the document by means of integration in an intermediate substrate which is in turn integrated in the document.

11. Process according to the above claim, **characterised in that** the intermediate substrate is a code security thread.

12. Process according to any of the above claims, **characterised in that** the object is a document such as a banknote and at least one non-perceptible item of information by an observer is represented on the document by means of integration in the structure of the document.

13. Process according to the above claim, **characterised in that** at least one non-perceptible item of information by an observer is integrated in a watermark.

14. Process according to any of the above claims, **characterised in that** at least one non-perceptible item of information by an observer is represented by the integration of liquid micro-capsules containing a substance wherein a property is measurable in the object.

15. Process according to the above claim, **characterised in that** the micro-capsules contain dipoles and the object wherein the micro-capsules are integrated is subjected to an electromagnetic field used to orient the dipoles specifically.

16. Process according to any of the above claims, **characterised in that** one of the two non-random items of information is physically integrated on or in said object, the other item of information being associated with a different physical substrate.

17. Process according to any of the above claims, **characterised in that** it comprises, in association with the marking of each of the two non-random items of information (K, N) on a physical substrate, the transmission of said items of information to an authentification CPU.

18. Process according to the above claim, **characterised in that** the file is queried via remote communication means.

19. Process according to any of the above claims, **characterised in that** it comprises a reading and transmission step (BI) of a non-perceptible item of information by an observer (K) on an authentification CPU.

20. Process according to any of the above claims taken in combination with claim 2, **characterised in that** the third item of information (M) comprises a set of a given number of pictograms each belonging to a given set of pictograms.

21. Process according to the above claim, **characterised in that** the third item of information is printed on the object and hidden in the printing of one of the non-random items of information (N).

22. Process according to any of the above claims taken in combination with claim 2, **characterised in that** the authentification also comprises the reading of the third item of information (M) and the verification of the correspondence of said item of information with the two non-random items of information (K, N).

23. Process according to the above claim, **characterised in that** the verification of the correspondence of the third item of information with the two non-random items of information uses a local memory linked to an authentification machine and containing the algorithm used to process the third item of information.

24. Process according to claim 23, **characterised in that** the verification of the correspondence of the third item of information with the two non-random items of information uses remote communication with a secure CPU to reconstitute the third item of information using said algorithm.

25. Process according to claim 1, **characterised in that** the object is a fiduciary or security document, particularly a banknote or a bank card.

## Patentansprüche

1. Verfahren zur Markierung (A,B) und Authentifizierung (C) eines Gegenstands (10), aufweisend zwei unterschiedliche Informationen (K,N), die zur Authentifizierung des Gegenstands verwendet werden, wobei mindestens eine der zwei Informationen (K) von einem Betrachter visuell nicht wahrnehmbar ist, wobei das Lesen der zwei Informationen und die Prüfung ihrer gegenseitigen Übereinstimmung während der Authentifizierung des Gegenstands durchgeführt werden, wobei die zwei Informationen nicht zufällig sind und die nicht wahrnehmbare Information durch Mittel verwirklicht ist, die mit der Struktur des Gegenstands zusammenwirken, **dadurch gekennzeichnet, daß** das Verfahren außerdem die Ausarbeitung (B3) einer dritten Information (M) aufweist, die ausgehend von einem vorgegebenen Algorithmus kodiert wird, dessen Eingangsdaten die zwei nicht zufälligen Informationen (K,N) sind, und **dadurch**, daß das Verfahren außerdem die Integration (B4) der dritten Information in den Gegenstand aufweist.

2. Verfahren nach dem vorstehenden Anspruch, in welchem der Algorithmus eine Bijektionsfunktion ist.

3. Verfahren nach einem der vorstehenden Ansprüche, **dadurch gekennzeichnet, daß** mindestens eine von einem Betrachter nicht wahrnehmbare Information (K) durch eine variable Reliefverformung verwirklicht ist, derart, daß an oder in dem Gegenstand ein von einem Betrachter nicht wahrnehmbarer dreidimensionaler Code gebildet ist.

4. Verfahren nach einem der vorstehenden Ansprüche, **dadurch gekennzeichnet, daß** mindestens eine von einem Betrachter nicht wahrnehmbare Information (K) durch einen Tintenauftrag variabler Dicke verwirklicht ist, derart, daß an oder in dem Gegenstand ein von einem Betrachter nicht wahrnehmbarer dreidimensionaler Code gebildet ist.

5. Verfahren nach dem vorstehenden Anspruch, **dadurch gekennzeichnet, daß** die von einem Betrachter nicht wahrnehmbare Information (K) eine Kombination aus einer gegebenen Anzahl von Zonen (211 bis 217) aufweist, wobei die Dicke des Tintenauftrags auf jeder dieser Zonen variabel ist.

6. Verfahren nach dem vorstehenden Anspruch, **dadurch gekennzeichnet, daß** die Dicke des Tintenauftrags jeder aufgedruckten Zone (211 bis 217) gleich einer ersten Dicke (E1) ist, die im wesentlichen zwischen 10 und 25 Mikrometer beträgt, oder gleich einer zweiten Dicke (E2) ist, die im wesentlichen zwischen 30 und 60 Mikrometer beträgt.

7. Verfahren nach einem der Ansprüche 5 bis 7, **dadurch gekennzeichnet, daß** mindestens eine von einem Betrachter nicht wahrnehmbare Information (K) mindestens einen in Reliefdruck, insbesondere Tiefdruck, gedruckten Teil (211 bis 217) aufweist.

8. Verfahren nach einem der Ansprüche 5 bis 8, **dadurch gekennzeichnet, daß** die Tinte eine Substanz enthält, die mit einer physikalischen, chemischen oder biologischen Eigenschaft versehen ist, die meßbar ist und proportional zu der Menge oder zu der Dicke der an oder in dem Gegenstand integrierten Substanz ist.

9. Verfahren nach dem vorstehenden Anspruch, **dadurch gekennzeichnet, daß** die Eigenschaft mechanisch, magnetisch, elektrisch oder optisch ist.

10. Verfahren nach einem der vorstehenden Ansprüche, **dadurch gekennzeichnet, daß** der Gegenstand ein Dokument, beispielsweise eine Banknote, ist und mindestens eine von einem Betrachter nicht wahrnehmbare Information an dem Dokument **dadurch verwirklicht ist, daß** sie in einem Zwischenträger integriert ist, der seinerseits in dem Dokument integriert ist.

11. Verfahren nach dem vorstehenden Anspruch, **dadurch gekennzeichnet, daß** der Zwischenträger ein Code-Sicherheitsfaden ist.

12. Verfahren nach einem der vorstehenden Ansprüche, **dadurch gekennzeichnet, daß** der Gegenstand ein Dokument, beispielsweise eine Banknote, ist und mindestens eine von einem Betrachter nicht wahrnehmbare Information an dem Dokument **dadurch** verwirklicht ist, daß sie in der Struktur des Dokuments integriert ist.

13. Verfahren nach dem vorstehenden Anspruch, **dadurch gekennzeichnet, daß** mindestens eine von einem Betrachter nicht wahrnehmbare Information in einem Wasserzeichen integriert ist.

14. Verfahren nach einem der vorstehenden Ansprüche, **dadurch gekennzeichnet, daß** mindestens eine von einem Betrachter nicht wahrnehmbare Information an dem Dokument **dadurch** verwirklicht ist, daß Flüssigkeitsmikrokapseln, die ein Produkt enthalten, wobei eine Eigenschaft dessen meßbar ist, in dem Gegenstand integriert sind.

15. Verfahren nach dem vorstehenden Anspruch, **dadurch gekennzeichnet, daß** die Mikrokapseln Dipole enthalten und daß der Gegenstand, in welchem die Mikrokapseln integriert sind, einem elektromagnetischen Feld ausgesetzt wird, das erlaubt, die Dipole auf eine spezifische Weise auszurichten.

16. Verfahren nach einem der vorstehenden Ansprüche, **dadurch gekennzeichnet, daß** eine der zwei nicht zufälligen Informationen physikalisch an oder in dem Gegenstand integriert ist, wobei die andere Information mit einem anderen physikalischen Träger verbunden ist.

17. Verfahren nach einem der vorstehenden Ansprüche, **dadurch gekennzeichnet, daß** es in Zusammenhang mit der Markierung jeder der zwei nicht zufälligen Informationen (K,N) auf einem physikalischen Träger die Übermittlung dieser Informationen zu einer zentralen Authentifizierungseinheit aufweist.

18. Verfahren nach dem vorstehenden Anspruch, **dadurch gekennzeichnet, daß** die Abfrage der Datei über Telekommunikationseinrichtungen erfolgt.

19. Verfahren nach einem der vorstehenden Ansprüche, **dadurch gekennzeichnet, daß** es einen Schritt (BI) des Lesens und der Übermittlung einer von einem Betrachter nicht wahrnehmbaren Information (K) zu einer zentralen Authentifizierungseinheit aufweist.

20. Verfahren nach einem der vorstehenden Ansprüche in Kombination mit Anspruch 2, **dadurch gekennzeichnet, daß** die dritte Information (M) eine Anordnung aus einer gegebenen Anzahl von Piktogrammen aufweist, von denen jedes zu einer gegebenen Gruppe von Piktogrammen gehört.

21. Verfahren nach dem vorstehenden Anspruch, **dadurch gekennzeichnet, daß** die dritte Information auf dem Gegenstand aufgedruckt ist und in dem Aufdruck einer der nicht zufälligen Informationen (N) versteckt ist.

22. Verfahren nach einem der vorstehenden Ansprüche in Kombination mit Anspruch 2, **dadurch gekennzeichnet, daß** die Authentifizierung außerdem das Lesen der dritten Information (M) und die Prüfung der Übereinstimmung dieser Information mit den zwei nicht zufälligen Informationen aufweist.

23. Verfahren nach dem vorstehenden Anspruch, **dadurch gekennzeichnet, daß** die Prüfung der Übereinstimmung der dritten Information mit den zwei nicht zufälligen Informationen einen lokalen Speicher verwendet, der mit einer Authentifizierungsvorrichtung verbunden ist und den Algorithmus enthält, der zur Ausarbeitung der dritten Information gedient hat.

24. Verfahren nach Anspruch 23, **dadurch gekennzeichnet, daß** die Prüfung der Übereinstimmung der dritten Information mit den zwei nicht zufälligen Informationen einen Nachrichtenfernverkehr mit einer gesicherten Zentraleinheit aufweist, um durch Anwenden des Algorithmus die dritte Information wiederherzustellen.

25. Verfahren nach Anspruch 1, **dadurch gekennzeichnet, daß** der Gegenstand ein Treuhand- oder Sicherheitsdokument, insbesondere eine Banknote oder eine Kreditkarte, ist.
